# EUROPÄISCHE PATENTSCHRIFT

(11) **EP 0 475 885 B1**
(45) Veröffentlichungstag und Bekanntmachung des Hinweises auf die Patenterteilung: **01.05.1996**
(21) Anmeldenummer: 91810555.2
(22) Anmeldetag: 11.07.1991
(51) Int. Cl.: D05B 19/00, G05B 19/409

(54) **Nähmaschine**
Sewing machine
Machine à coudre

(30) Priorität: 27.08.1990 CH 2782/90
(43) Veröffentlichungstag der Anmeldung: 18.03.1992
(73) Patentinhaber: FRITZ GEGAUF AG BERNINA-NÄHMASCHINENFABRIK, CH-8266 Steckborn (CH)
(72) Erfinder: Hausammann, Erich, CH-8272 Ermatingen (CH)
(74) Vertreter: Steiner, Martin

(56) Entgegenhaltungen:
- EP-A- 0 268 336
- WO-A-90/00273
- DE-A- 2 944 071
- DE-A- 3 833 605
- FR-A- 2 515 378
- US-A- 4 688 503
- US-A- 4 811 673
- US-A- 4 901 656

## Beschreibung

Die vorliegende Erfindung betrifft eine Nähmaschine gemäss Oberbegriff des Anspruches 1. Eine derartige Nähmaschine ist bekannt aus der DE-A-3 833 605. Die immer weitergehende Miniaturisierung elektronischer Bauelemente, insbesondere elektronischer Speicher gestattet es, in dem in einer Nähmaschine verfügbaren Raum eine immer grössere Zahl vorgegebener Stichmuster bzw. Sticharten fest abzuspeichern und einzeln abzurufen. Entsprechend wird es aber immer schwieriger und zeitraubender, ein bestimmtes, gewünschtes Stichmuster auf dem Bildschirm zur Anzeige zu bringen, auszuwählen und zur Durchführung des Nähvorganges zu aktivieren.

Ziel vorliegender Erfindung ist es, eine Auswahl zu vereinfachen und zu erleichtern. Dieses Ziel wird gemäss dem Kennzeichen des Anspruchs 1 erreicht. Dank dieser Ausbildung ist es nun möglich, vorerst ein Menue von Stichmustergruppen auf den Bildschirm zu bringen, eine bestimmte Mustergruppe zu wählen und sodann die einzelnen Stichmuster dieser Mustergruppe auf der Anzeige anzuzeigen und entsprechend auszuwählen. Dieses hierarchische Vorgehen beim Aufsuchen und Auswählen eines bestimmten Stichmusters oder eines bestimmten Nähvorgangs erleichtert und beschleunigt die Auswahl ganz erheblich.

Aus der WO-90/00273 ist es zwar bekannt, bei der Programmgestaltung für eine CNC-Werkzeugmaschine den Dialogaustausch zwischen DVA und Benutzer mittels nacheinander angezeigter, vom Allgemeinen zum Speziellen gehenden Informationen die Synthese zu erleichtern. Es ist jedoch nicht vorgesehen, durch hierarchische Anzeige von Gruppen von Programmmöglichkeiten bis zu einzelnen, fest vorgegebenen Einzelprogrammen eine Auswahl anzubieten.

Weitere Merkmale und Vorteile der Erfindung sind den abhängigen Ansprüchen und der folgenden Beschreibung zu entnehmen.

Anhand der Zeichnung wird nun ein Ausführungsbeispiel der erfindungsgemässen Nähmaschine erläutert.
- Fig. 1: ist eine Seitenansicht der Nähmaschine mit einem von der Maschine getrennten Verstellgerät,
- Fig. 2: zeigt das Anzeige- und Tastenfeld der Nähmaschine in grösserem Massstab und einer an der Maschine angeordneten Rollkugel,
- Fig. 3 bis 7: zeigen einige typische Beispiele von Anzeigen, die auf den Bildschirm gebracht werden können.

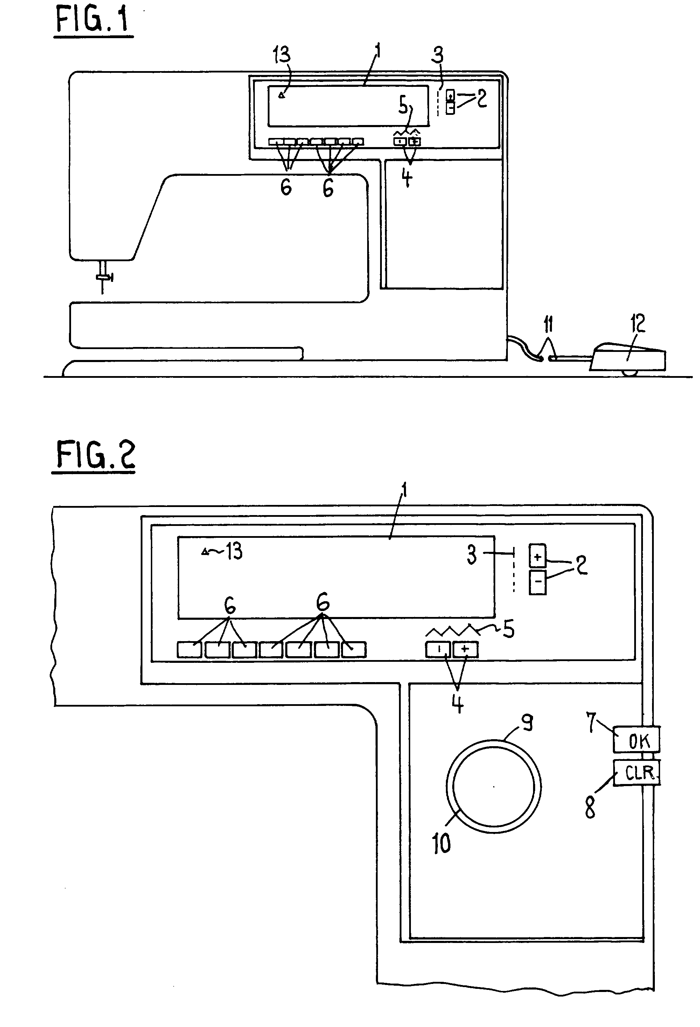

Die in Fig. 1 schematisch in Seitenansicht dargestellte Nähmaschine weist eine elektrooptische Anzeige 1 mit beispielsweise 64 x 256 Bildpunkten auf. Seitlich dieser Anzeige sind zwei Tasten 2 zur Einstellung der Stichlänge angeordnet, was durch ein daneben dargestelltes Symbol 3 angedeutet ist. Rechts unterhalb der Anzeige 1 sind entsprechende Tasten 4 zur Einstellung der Stichbreite angeordnet, was ebenfalls durch ein Symbol 5 angedeutet ist. Links unterhalb der Anzeige 1 sind Wähltasten 6 zur Vorwahl besonders häufiger Näharten angebracht. An der Maschine ist ferner eine Bestätigungstaste 7 (OK) sowie eine Löschtaste 8 (CLR) angeordnet. Die Einstellung der Stichlänge und Stichbreite könnte auch mittels Einstellknöpfen, Daumenrädern, Stellschiebern, etc. erfolgen, welche anstelle der Tastenpaare 2 und 4 an der Maschine angeordnet sind.

Mit der Nähmaschine ist über ein Kabel 11 ein Verstellgerät 12 beispielsweise eine sogenannte "Maus" oder Rollkugel oder auch eine andere Einstellvorrichtung wie beispielsweise ein Steuerknüppel ("Joy-Stick") verbunden. Mittels dieses Steuergerätes kann ein Bildpunkt oder Cursor 13 an jede beliebige Stelle der Anzeige 1 gesteuert werden.

Besonders vorteilhaft wäre die direkte Anordnung einer Rollkugel (Track Ball) oder eines Steuerknüppels (Joy Stick) an der Frontseite der Maschine. Dabei könnte z.B. eine Rollkugel 9/10 (Fig. 2) zusammen mit der Betätigungstaste 7 (OK) und der Löschtaste 8 (CLR) als Bedienungseinheit in die Maschine integriert und ergonomisch so angeordnet werden, dass eine optimale ermüdungsfreie Bedienung der Maschine bei der menuegesteuerten Stichmusterwahl ermöglicht wird.

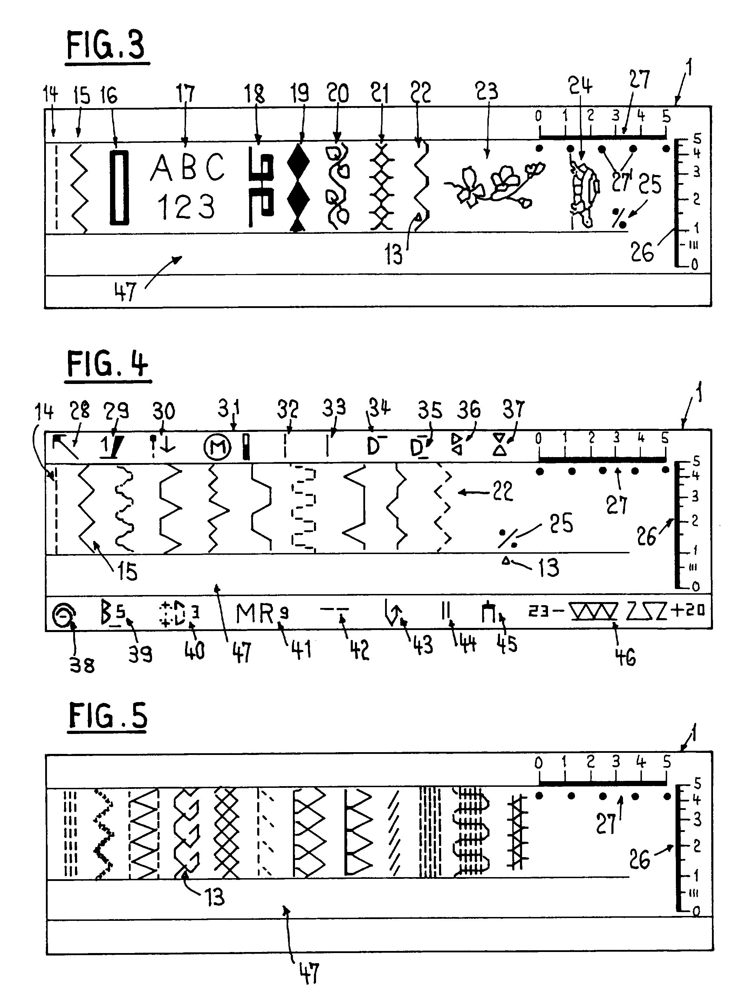

Beim Einschalten der Nähmaschine erscheint auf der Anzeige 1 automatisch ein Menue von bestimmten grundsätzlichen Stichmustergruppen bzw. Arten von Stichmustern wie in Fig. 3 dargestellt. Es handelt sich um Mustergruppen wie Geradstich 14, Zick-Zack-Nähen 15, Knopfloch-Nähen 16, alphanummerische Zeichen 17, geometrische Muster 18, Kompaktstiche 19, Floralstiche (Blatt-/Blumenmotive) 20, Hohlsaumstiche 21, Nutzstiche 22, grosse Muster 23 und Figuren 24. Diese Klassierung von Sticharten bzw. Musterarten ist nicht abschliessend und verbindlich und es könnte durchaus ein zweites Menue gespeichert und anzeigbar sein, welches dadurch gewählt werden kann, dass der Cursor 13 auf das Zeichen 25 gebracht und die Bestätigungstaste 7 gedrückt wird, in welchem Falle das nächste entsprechende Menue, also ein weiteres Menue von grundsätzlichen Stichmustergruppen oder Musterarten angezeigt wird. Erscheint die gewünschte grundsätzliche Mustergruppe oder Musterart auf dem angezeigten Menue, so wird der Cursor 13 in den Bereich dieser Mustergruppe gebracht und wiederum die Bestätigungstaste 7 gedrückt. Damit wird nun ein nächstes Menue von speziellen Stichmustern angezeigt, welche in der zuvor gewählten Stichmustergruppe enthalten sind. In der Zeichnung ist angenommen, der Cursor 13 werde auf die Stichmustergruppe 22 des Menues nach Fig. 3 gebracht und diese Mustergruppe werde dann gewählt, in welchem Falle das Menue gemäss Fig. 4 erscheint. In diesem Falle ist angenommen, Geradstich 14 und Zick-Zack-Stich 15 würden wieder angezeigt zusammen mit verschiedenen weiteren Stichmustern. Der Cursor 13 kann nun auf das gewünschte Stichmuster gebracht und durch Drücken der Betätigungstaste 7 das betreffende Muster gewählt werden. In diesem Menue wird nun ausser den Stichmustern mittels zweier Balkenanzeigen 26 und 27 auch die Stichlänge bzw. Stichbreite angezeigt. Im Normalfall sind die optimalen Werte für Stichlänge und Stichbreite sowie gegebenenfalls auch für die Stichfeldlage für jedes Stichmuster vorprogrammiert. Diese Werte können aber mittels der Tasten 2 und 4 beliebig verändert werden. Leuchtpunkte 27′ unter der Balkenanzeige 27 dienen der Anzeige bzw. Auswahl der Stichlage, wobei die Auswahl dadurch erfolgen kann, dass der Cursor an die gewünschte Stelle bzw. auf den gewünschten Punkt 27′ gebracht und der entsprechende Wert durch Drücken der Bestätigungstaste 7 zur nachträglichen Steuerung der Maschine eingespeichert wird. Am oberen und unteren Rand der Anzeige werden aber weitere Symbole angezeigt, auf welche der Cursor 13 gebracht werden kann, um bestimmte Funktionen der gewählten Stichmustergruppe oder dem Stichmuster zuzuordnen. Ein Symbol 28 bedeutet Rückschaltung zum ersten Menue, ein Symbol 29 bedeutet Nähfussanzeige, ein Symbol 30 bedeutet Nadelstop unten, ein Symbol 31 dient der Wahl der Motordrehzahl. Es kann sich beispielsweise darum handeln, dass bei Anwahl dieses Symbols der Motor automatisch nur mit halber Geschwindigkeit dreht. Ein Symbol 32 bedeutet Langstich, ein Symbol 33 Heftstich, ein Symbol 34 Musteranfang, ein Symbol 35 Musterende, ein Symbol 36 Spiegelbild seitwärts, ein Symbol 37 Spiegelbild in Nährichtung, ein Symbol 38 Unterfadenkontrolle, ein Symbol 39 Einzelmusterfixierung, ein Symbol 40 Musterverlängerung, ein Symbol 41 Speicherprogramm, ein Symbol 42 Programmunterbrechung im Speicher, ein Symbol 43 Rückwärtsnähen, ein Symbol 44 Stichzahl verdoppeln, ein Symbol 45 Doppelnadelbegrenzung und ein Symbol 46 Balance - / Balance +. Die Symbole 29 bis 46 erscheinen stets, sind aber in den weiteren Figuren 5 bis 7 zur Vereinfachung nicht mehr dargestellt. Befindet sich das gewünschte Stichmuster nicht auf dem Menue gemäss Fig. 4, kann wiederum der Cursor 13 zum Symbol 25 gebracht werden, was Weiterschalten bedeutet und durch Betätigung der Bestätigungstaste 7 kann das nächste Menue beispielsweise das Menue gemäss Fig. 5 zur Anzeige gebracht werden. Wie beschrieben, kann dann der Cursor 13 auf ein bestimmtes Muster eingestellt und dieses durch Drücken der Bestätigungstaste 7 gewählt und aktiviert werden.

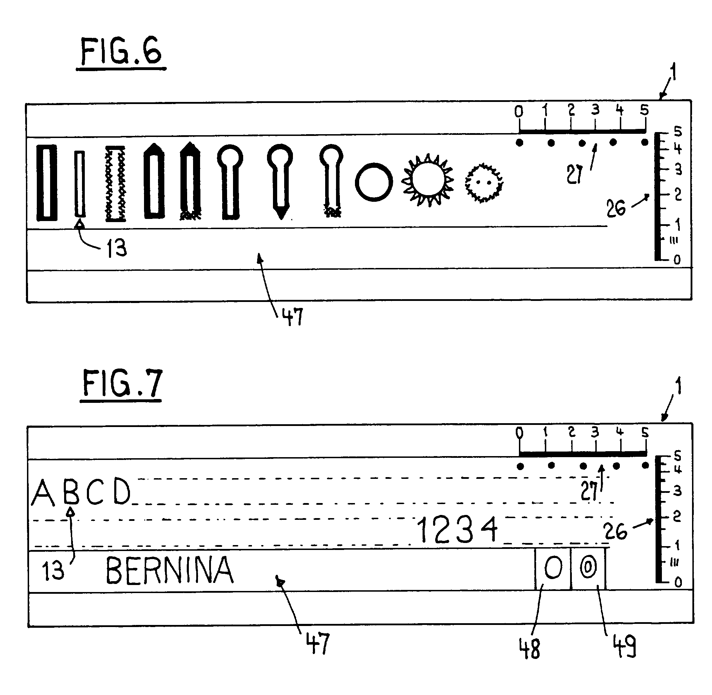

Wird auf dem die Stichmustergruppen anzeigenden Menue gemäss Fig. 3 der Cursor 13 zum Symbol 16 (Knopfloch-Nähen) gebracht und die Bestätigungstaste 7 gedrückt, erscheint das Menue gemäss Fig. 6 für verschiedene Knopflocharten, und der Cursor kann nun zum gewünschten Symbol gebracht werden, um diese bestimmte Stichart vorzuwählen und die Nähmaschine anschliessend entsprechend zu steuern.

Werden aus dem Menue gemäss Fig. 3 alphanummerische Zeichen gewählt, erscheint das Menue gemäss Fig. 7. In dieser Figur sind zur Vereinfachung nur einige Buchstaben des Alphabets und einige Zahlen dargestellt. Es können aber weitere Schriftzeichen oder Symbole und verschiedene Schriftarten als Muster zur Verfügung stehen. Jedes Zeichen kann hierbei mittels des Cursors 13 angewählt werden. Dabei können Worte und mehrstellige Zahlen gebildet werden, wenn entsprechende Zeichen nacheinander ausgewählt werden. Alle Menues werden so angezeigt, dass unter den eigentlichen Symbolen ein freier Streifen 47 verbleibt, und bei der Anzeige der alphanummerischen Zeichen gemäss Fig. 7 dient nun dieser Streifen 47 dazu, die nacheinander gewählten Stichmuster gesamthaft also beispielsweise das Wort BERNINA zur Kontrolle anzuzeigen. Zum Sticken der entsprechenden Muster kann durch Anwählen der Symbole 48 und 49 ausserdem die Stichart (Geradstich oder Zickzackstich) vorgewählt werden.

Beim bisher beschriebenen Ausführungsbeispiel ist angenommen, dass auch die gebräuchlichsten Stichmuster bewusst gewählt und programmiert werden müssen. Der Mikroprozessor könnte jedoch auch so gestaltet sein, dass im ersten Menue die am häufigsten benutzten Stichmuster angezeigt werden und wobei ohne besondere Vorwahl eines Musters die Maschine automatisch einen Geradstich mit vorbestimmter Stichlänge näht. In diesem Falle könnten die Tasten 6 zur Vorwahl der gebräuchlichsten Stiche wegfallen. Es könnte aber auch so sein, dass bei Anzeige jedes Menue ein bestimmtes, besonders gebräuchliches Stichmuster automatisch angewählt ist, während alle übrigen in der oben beschriebenen Weise ausgewählt werden müssen. Es wäre auch denkbar, die besonderen Funktionen 28 bis 46 nicht stets mit jedem Menue von Stichmustern anzuzeigen, sondern für diese Funktionen ein besonderes Menue bereitzustellen. Es liegt jedoch ein besonderer Vorteil darin, möglichst viele Informationen zugleich anzuzeigen und ohne Umschaltung nacheinander wählen zu können. Um dabei den Ueberblick zu behalten, kann das jeweils gewählte Muster bzw. die gewählte Funktion nach erfolgter Wahl und Bestätigung beispielsweise durch Blinken hervorgehoben werden, damit bis zur Einleitung des Nähvorganges stets überprüfbar bleibt, welche Parameter für den Nähvorgang massgebend sind.

Es sind weitere Varianten möglich. So könnten z. B. auch die Stichlänge und -breite in der Weise vorgewählt werden, dass der Cursor 13 an die der gewünschten Grösse entsprechende Stelle der Balkenanzeigen 26 und 27 bzw. der ihnen zugeordneten Skalen gebracht und der gewählte Wert durch Drücken der Bestätigungstaste 7 eingespeichert wird. Die Grund-Sticharten, die gemäss Fig. 3 als erstes Menue angezeigt werden, könnten mindestens teilweise auch durch anzuzeigende Worte bezeichnet werden.

Ausserdem wäre es sogar möglich, ein erstes Menue vorzusehen, welches individuell die vom Benutzer der Nähmaschine am häufigsten angewendeten Stichmuster anzeigt. Diese Stichmuster könnten zu einem beliebigen Zeitpunkt, vorzugsweise nachdem der Benutzer die Anwendungsmöglichkeiten der Maschine und die eigenen Bedürfnisse kennt, aus den entsprechenden Menues in das individuelle Menue übertragen werden.

## Patentansprüche

1. Nähmaschine mit einer elektrooptischen Anzeige (1) zur Darstellung von aus Speichern abrufbaren Stickmustern und/oder Parametern und mit Mitteln (7, 12, 13) zur Auswahl angezeigter Stichmuster und/oder Parameter, dadurch gekennzeichnet, dass hierarchisch mindestens ein Menue von durch je eine Darstellung bezeichneten Stichmustergruppen (16 - 24) gespeichert, abrufbar und anzeigbar ist, dass Mittel (7, 12, 13) vorgesehen sind, um aus dem Menue eine Stichmustergruppe zu wählen, dass Mittel (7) vorgesehen sind, um durch die Wahl einer Stichmustergruppe automatisch ein Menue (Fig. 5 oder 6) von einzelnen Stichmustern dieser Gruppe aus gespeicherten und abrufbaren Menues von Stickmustern abzurufen und anzuzeigen, und dass Mittel (7) vorgesehen sind, um aus einem Menue von Stichmustern (Fig. 5 oder 6) ein Stichmuster auszuwählen und zu aktivieren.

2. Nähmaschine nach Anspruch 1, dadurch gekennzeichnet, dass ein Menue der am häufigsten benutzten Stichmuster oder Stichmustergruppen gespeichert und anzeigbar ist.

3. Nähmaschine nach Anspruch 1 oder 2, dadurch gekennzeichnet, dass ein Menue von wählbaren Funktionen (28-46) gespeichert ist.

4. Nähmaschine nach einem der Ansprüche 1 bis 3, dadurch gekennzeichnet, dass Mittel (7,12,13) vorgesehen sind, um auf der Anzeige (1) zeilenweise Stichmustergruppen bzw. Stichmuster und Funktionssymbole (28 - 46) anzuzeigen und auszuwählen.

5. Nähmaschine nach Anspruch 4, dadurch gekennzeichnet, dass Mittel (7,12,13) vorgesehen sind, um Stichmuster z. B. Buchstaben oder Zahlen (17) einzeln zu wählen und zu kombinieren und die kombinierten Muster z. B. Worte oder Zahlen auf der Anzeige (1) anzuzeigen.

6. Nähmaschine nach einem der Ansprüche 1 bis 5, dadurch gekennzeichnet, dass auf der Anzeige (1) zugleich Stiche oder Stichmuster und Parameter z. B. Stichlänge und -breite (26, 27) anzeigbar sind.

7. Nähmaschine nach einem der Ansprüche 1 bis 6, gekennzeichnet durch Mittel (13, 25) zur Fortschaltung bzw. zur Wahl von gleichartigen Menues und zur Anzeige derselben.

8. Nähmaschine nach einem der Ansprüche 1 bis 7, gekennzeichnet durch Wähltasten (6) für häufig verwendete Sticharten oder -muster.

9. Nähmaschine nach Anspruch 2, dadurch gekennzeichnet, dass Mittel (7,12,13) vorgesehen sind, um Stichmuster aus beliebigen Menues von Stichmustern auszuwählen und als Teil des Menues der am häufigsten benutzten Stichmuster abzuspeichern.

## Claims

1. Sewing machine having an electro-optical display (1) for displaying stitch patterns and/or parameters to be recalled from memories, and means (7, 12, 13) for selecting displayed stitch patterns and/or parameters, characterised in that at least one menu of stitch pattern groups (16 - 24) which are designated each by a respective representation is stored and capable of being recalled and displayed in a hierarchical manner, in that means (7, 12, 13) are provided in order to select a stitch pattern group from said menu, in that means (7) are provided in order to automatically recall and display a menu (Fig. 5 or 6) of individual stitch patterns of a given group among several stored and recallable menues of stitch patterns when said stitch pattern group is selected, and in that means are provided in order to select a stitch pattern from a menu of stitch patterns (Fig. 5 or 6).

2. Sewing machine according to claim 1, characterised in that a menu of the most frequently used stitch patterns or stitch pattern groups is stored and capable of being displayed.

3. Sewing machine according to claim 1 or 2, characterised in that a menu of selectable functions (28 - 46) is stored.

4. Sewing machine according to any one of claims 1 to 3, characterised in that means (7, 12, 13) are provided for line-by-line display and selection of stitch pattern groups resp. stitch patterns and function symbols (28 - 46) on the display (1).

5. Sewing machine according to claim 4, characterised in that means (7, 12, 13) are provided for the individual selection and the combination of stitch patterns, e.g. letters or figures (17), and for the display of the combined patterns, e.g. words or numbers, on said display (1).

6. Sewing machine according to any one of claims 1 to 5, characterised in that said display (1) allows the simultaneous display of stitches or stitch patterns and parameters such as the stitch length and width (26, 27).

7. Sewing machine according to any one of claims 1 to 6, characterised by means (13, 25) for scrolling through resp. selecting menus of the same kind and for their display.

8. Sewing machine according to any one of claims 1 to 7, characterised by selecting buttons (6) for frequently used stitch types or patterns.

9. Sewing machine according to claim 2, characterised in that means (7, 12, 13) are provided in order to select stitch patterns from any desired stitch pattern menus and to store them as a part of said menu of the most frequently used stitch patterns.

## Revendications

1. Machine à coudre, comprenant un affichage (1) électrooptique pour la présentation de motifs de points et/ou de paramètres pouvant être appelés de mémoires, ainsi que des moyens (7, 12, 13) pour la sélection de motifs et/ou de paramètres affichés, caractérisée en ce qu'au moins un menu de groupes de motifs (16 - 14) désignés chacun par une représentation correspondante est mémorisé et capable d'être appelé et affiché de manière hiérarchique, en ce que des moyens (7, 12, 13) sont prévus pour choisir un groupe de motifs dudit menu, que des moyens (7) sont prévus pour appeler et afficher automatiquement, parmi les menus mémorisés et pouvant être appelés, un menu (fig. 5 ou 6) de motifs individuels d'un groupe lorsque ce groupe est sélectionné, et en ce que des moyens (7) sont prévus pour sélectionner et activer un motif dans un menu de motifs (fig. 5 ou 6).

2. Machine à coudre selon la revendication 1, caractérisée en ce qu'un menu des motifs ou groupes de motifs le plus souvent utilisés est mémorisé et capable d'être appelé.

3. Machine à coudre selon la revendication 1 ou 2, caractérisée en ce qu'un menu de fonctions (28 - 46) pouvant être sélectionnées est mémorisé.

4. Machine à coudre selon l'une quelconque des revendications 1 à 3, caractérisée en ce que des moyens (7, 12, 13) sont prévus pour afficher et sélectionner ligne par ligne des groupes de motifs resp. des motifs et des symboles de fonctions (28 - 46) sur l'affichage (1).

5. Machine à coudre selon la revendication 4, caractérisée en ce que des moyens (7, 12, 13) sont prévus pour choisir et combiner des motifs individuels tels que des lettres ou des chiffres (17) et pour afficher les motifs combinés, par exemple des mots ou des chiffres, sur ledit affichage (1).

6. Machine à coudre selon l'une quelconque des revendications 1 à 5, caractérisée en ce que l'affichage (1) permet l'affichage simultané de points ou motifs et de paramètres tels que la longueur et la largeur du point (26, 27).

7. Machine à coudre selon l'une quelconque des revendications 1 à 6, caractérisée par des moyens (13, 25) pour avancer dans resp. sélectionner des menus du même type et pour leur affichage.

8. Machine à coudre selon l'une quelconque des revendications 1 à 7, caractérisée par des boutons de sélection (6) pour des points ou motifs souvent utilisés.

9. Machine à coudre selon la revendication 2, caractérisée en ce que des moyens (7, 12, 13) sont prévus pour sélectionner des motifs dans tout menu de motifs désiré et pour les mémoriser dans ledit menu des motifs le plus souvent utilisés.
